# EUROPEAN PATENT APPLICATION

(11) **EP 4 306 270 A1**
(43) Date of publication of application: **17.01.2024**
(21) Application number: 22767172.4
(22) Date of filing: 08.03.2022
(51) Int. Cl.: B25J 9/16, G05B 19/05, G05B 19/418

(54) **PROGRAM MANAGEMENT DEVICE, ROBOT CONTROL SYSTEM, AND PROGRAM MANAGEMENT METHOD**

(30) Priority: 08.03.2021 JP 2021036686
(71) Applicant: Kyocera Corporation, Kyoto-shi Kyoto 612-8501 (JP)
(72) Inventor: TOMIIE Norio, Kyoto-shi, Kyoto 612-8501 (JP)
(74) Representative: TBK
(86) International application number: PCT/JP2022/010146
(87) International publication number: WO 2022/191218

(57) **Abstract**

A program management apparatus includes a communicator, a storage, and a controller. The communicator is communicable with at least one robot controller. The storage stores a plurality of first programs for controlling an operation of a robot, the plurality of first programs being executed by the at least one robot controller. The controller outputs at least one of the plurality of first programs selected on a basis of a request from a cooperation controller capable of operating together with the at least one robot controller to certain at least one of the at least one robot controller that is to operate together with the cooperation controller.

## Description

### CROSS-REFERENCE TO RELATED APPLICATIONS

The present application claims priority to Japanese Patent Application No. 2021-36686 (filed March 8, 2021), and the contents of this application are incorporated herein by reference in their entirety.

### TECHNICAL FIELD

The present disclosure relates to a program management apparatus, a robot control system, and a method for managing a program.

### BACKGROUND OF INVENTION

Configurations where a PLC (programmable logic controller) controls operations of a plurality of robots are known. Patent Literature 1, for example, describes a robot control system capable of operating a plurality of robots using an operation panel through switching means. Patent Literature 2 describes a configuration where a sequencer controls sequences to be executed by robots.

### CITATION LIST

### PATENT LITERATURE

Patent Literature 1: Japanese Unexamined Patent Application Publication No. 2-274483
Patent Literature 2: Japanese Unexamined Patent Application Publication No. 61-23201

### SUMMARY

In an embodiment of the present disclosure, a program management apparatus includes a communicator, a storage, and a controller. The communicator is communicable with at least one robot controller. The storage stores a plurality of first programs for controlling an operation of a robot, the plurality of first programs being executed by the at least one robot controller. The controller outputs at least one of the plurality of first programs selected on a basis of a request from a cooperation controller capable of operating together with the at least one robot controller to certain at least one of the at least one robot controller that is to operate together with the cooperation controller.

In another embodiment of the present disclosure, a program management apparatus includes an interface that receives a user input, a communicator, a storage, and a controller. The communicator is communicable with at least one robot controller capable of controlling at least one robot and at least one cooperation controller capable of operating together with the at least one robot controller. The storage stores at least one first program executable by the at least one robot controller and at least one second program executable by the at least one cooperation controller. The controller is connected to the interface, the communicator, and the storage. The controller outputs a certain one of the at least one second program corresponding to certain at least one of the at least one first program selected on a basis of the user input to a certain one of the at least one cooperation controller that is to operate together with certain at least one of the at least one robot controller that is to execute the certain at least one first program.

In another embodiment of the present disclosure, a program management apparatus includes an interface that receives a user input, a communicator, a storage, and a controller. The communicator is communicable with at least one robot controller capable of controlling at least one robot and at least one cooperation controller capable of operating together with the at least one robot controller. The storage stores at least one first program executable by the at least one robot controller and at least one second program executable by the at least one cooperation controller. The controller is connected to the interface, the communicator, and the storage. The controller outputs certain at least one of the at least one first program corresponding to a certain one of the at least one second program selected on a basis of the user input to certain at least one of the at least one robot controller that is to operate together with a certain one of the at least one cooperation controller that is to execute the certain second program.

In another embodiment of the present disclosure, a robot control system includes the program management apparatus, the robot controller, and the cooperation controller.

In another embodiment of the present disclosure, a method for managing a program includes storing a plurality of first programs to be executed by at least one robot controller that controls an operation of a robot. The method for managing a program includes outputting at least one of the plurality of first programs selected by a cooperation controller capable of cooperating with the at least one robot controller to one of the at least one robot controller selected by the cooperation controller.

### BRIEF DESCRIPTION OF THE DRAWINGS

FIG. 1 is a schematic diagram illustrating an example of configuration of a robot control system according to an embodiment.
FIG. 2 is a block diagram illustrating an example of the configuration of the robot control system according to the embodiment.
FIG. 3 is a schematic diagram illustrating an example of a configuration where a robot and an external apparatus operate together.
FIG. 4 is a flowchart illustrating an example of a procedure of earlier preparation of programs.
FIG. 5 is a table indicating an example of setting of input ports and output ports.
FIG. 6 is a diagram illustrating an example of a user interface for setting relationships of input ports and output ports between a PLC and a robot control apparatus or the external apparatus.
FIG. 7 is a diagram illustrating an example of a user interface for setting relationships of input ports and output ports between the robot control apparatus and the external apparatus.
FIG. 8 is a flowchart illustrating an example of a procedure for selecting a program and causing a robot to perform an operation.
FIG. 9 is a flowchart illustrating an example of an operation based on a selected program.
FIG. 10 is a diagram illustrating an example of a ladder diagram corresponding to a ladder program.
FIG. 11 is a diagram illustrating an example of flow of data at a time when a program is selected and a robot is caused to perform an operation.

### DESCRIPTION OF EMBODIMENTS

A robot control apparatus controls an operation of a robot by executing a program created in advance. The robot control apparatus needs to switch programs in order to cause the robot to perform a plurality of motions. Convenience of management of programs corresponding to different operations performed by the robot is desired to be improved.

### (Outline of Robot Control System 1)

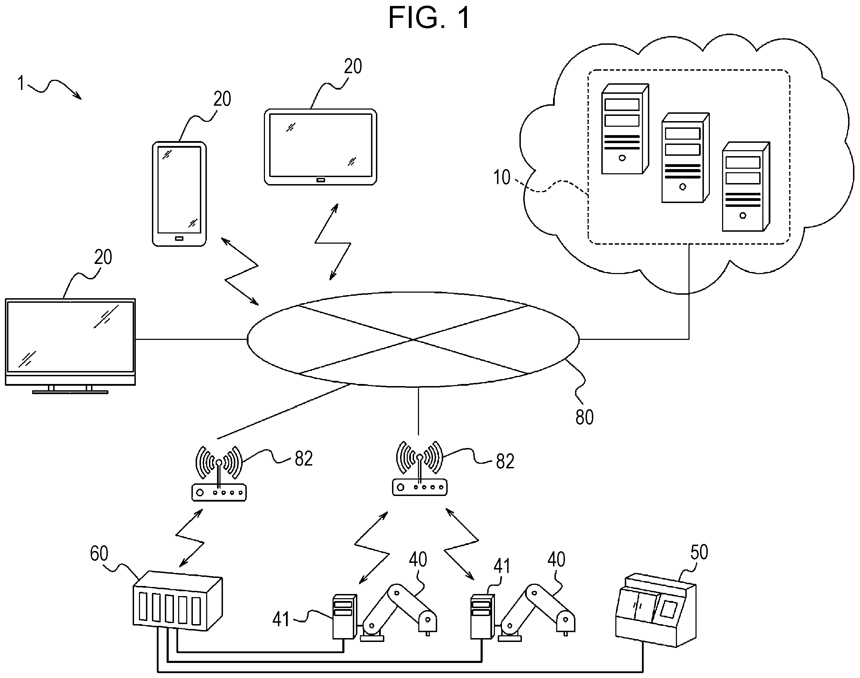

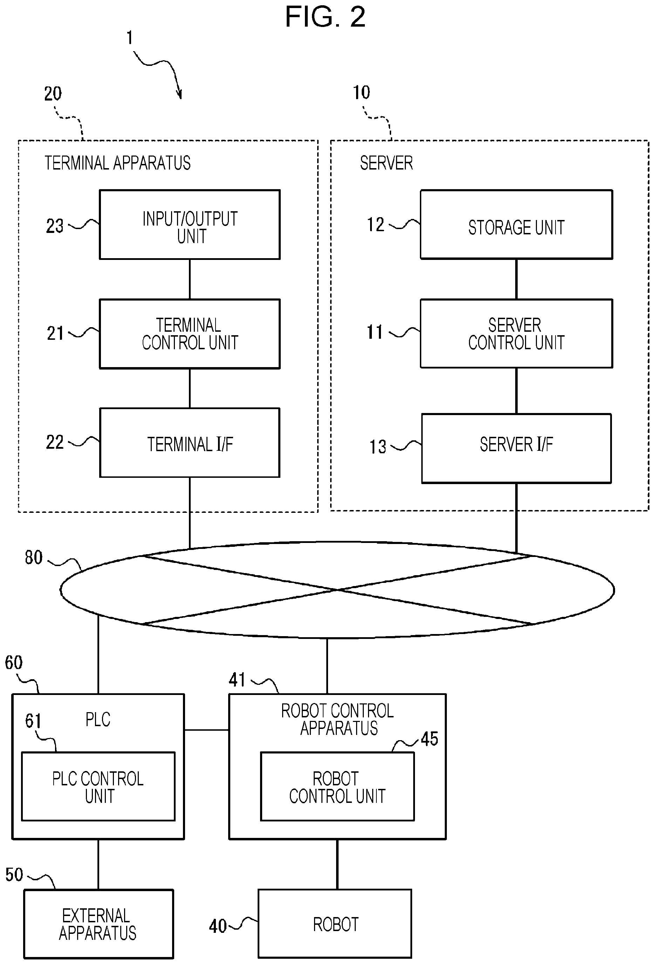

In an embodiment, a robot control system 1 includes, as illustrated in FIGs. 1 and 2, servers 10, terminal apparatuses 20, robots 40, robot control apparatuses 41, and a programmable logic controller (PLC) 60. The robot control apparatuses 41 control the robots 40. The robot control system 1 may optionally include an external apparatus 50.

In the present embodiment, the robot control system 1 causes the PLC 60 to select operations to be performed by the robots 40. That is, an operator, who is a user of the robot control system 1, can select operations to be performed by the robots 40 by operating the PLC 60. The robot control system 1 stores in advance the programs for causing the robots 40 to perform the operations and downloads one of the programs onto one of the robot control apparatuses 41 on the basis of the selection of a corresponding operation performed by the PLC 60. The robot control system 1 generates a ladder program for causing the PLC 60 to operate together with the robot control apparatus 41 on the basis of the program downloaded onto the robot control apparatus 41 and downloads the ladder program onto the PLC 60.

When the robot control system 1 includes the external apparatus 50, the PLC 60 instructs the external apparatus 50 to perform operations. The robot control system 1 generates a ladder program such that the PLC 60 causes the external apparatus 50 to operate together with the robots 40. The robot control system 1 thus causes the robots 40 to operate together with the external apparatus 50.

In a system in a comparative example, an operator might need to copy a program for each of robot control apparatuses. With the robot control system 1 according to the present embodiment, on the other hand, copying can be omitted. By downloading a program onto each of the robot control apparatuses 41 as necessary, the amount of memory consumed by the robot control apparatuses 41 can be reduced. By downloading a program onto each of the robot control apparatuses 41 only when the corresponding robot 40 needs to be operated, risks of the robots 40 moving at unintended times can be reduced.

In the system in the comparative example, the operator can copy a program for each of the robot control apparatuses by operating a terminal apparatus. With the robot control system 1 according to the present embodiment, on the other hand, the operator can install a program on each of the robot control apparatuses 41 by selecting the program through the PLC 60, which improves the convenience of the management of the programs for operating the robots 40.

Even when the operator has copied a program for each of the robot control apparatuses in the system in the comparative example, the operator cannot control the operations of the robots only with a PLC unless a ladder program of the PLC complies with the program. In the present embodiment, on the other hand, the robot control system 1 can generate a ladder program that complies with a selected program and download the ladder program onto the PLC 60. The operator, therefore, can operate the robots 40 just by operating the PLC 60.

Since the operator can control the robots 40 through a simple operation using the PLC 60, which is different from the terminal apparatuses 20, in the robot control system 1 according to the present embodiment, operability can be improved and risks of unauthorized operation can be reduced.

An example of configuration of the robot control system 1 according to the present embodiment will be described hereinafter.

### (Example of Configuration of Robot Control System 1)

Components of the robot control system 1 are communicably connected to one another over a network 80. The components of the robot control system 1 may be communicably connected to one another without the network 80, instead. The components of the robot control system 1 may be communicably connected to one another by wire or wirelessly. The components of the robot control system 1 may be communicably connected to one another over a dedicated network, instead. How the components of the robot control system 1 are communicably connected to one another is not limited to these examples and may be communicably connected to one another in one of various other modes, instead.

The servers 10 and the robot control apparatuses 41 or the PLC 60 are communicably connected to each other through access points 82 in FIG. 1, but may be communicably connected to each other through wireless base stations or without the access points 82 or the wireless base stations, instead. The access points 82 refer to radio equipment for connecting terminals having a wireless connection function to each other and to another network and are typically devices that operate on Layer 1 (physical layer) and Layer 2 (data link layer) communication protocols in an OSI (Open System Interconnect) reference model. The robot control apparatuses 41, the PLC 60, and the external apparatus 50 are communicably connected to one another without the network 80 in FIG. 1, but may be communicably connected to one another over the network 80, instead.

The number of servers 10 and the number of terminal apparatuses 20 are not limited to three as in this example, and may be two or less, or four or more, instead. The number of pairs of a robot 40 and a robot control apparatus 41 is not limited to two as in this example, and may be one, or three or more, instead. Each robot control apparatus 41 may control one robot 40 as in this example, but may control two or more robots 40, instead.

The components will be specifically described hereinafter.

### <Servers 10>

The servers 10 each include a server control unit 11, a storage unit 12, and a server interface 13. The server control unit 11 will also be referred to simply as a control unit. The server interface 13 will also be referred to as a server I/F 13. The servers 10 are communicably connected to the network 80 through the server I/Fs 13. The servers 10 will also be referred to as program management apparatuses.

The server control unit 11 may include at least one processor in order to achieve various functions of the server 10. The processor can execute a program for achieving the various functions of the server 10. The processor may be achieved as a single integrated circuit. The integrated circuit will also be abbreviated as an IC. The processor may be achieved as a plurality of integrated circuits and discrete circuits communicably connected to one another. The processor may include a CPU (central processing unit). The processor may include a DSP (digital signal processor) or a GPU (graphics processing unit). The processor may be achieved on the basis of one of various other known techniques.

The servers 10 each further include the storage unit 12. The storage unit 12 may include an electromagnetic storage medium such as a magnetic disk or a memory such as a semiconductor memory or a magnetic memory. The storage unit 12 may be implemented as an HDD (hard disk drive) or an SSD (solid-state drive). The storage unit 12 stores various pieces of information, programs to be executed by the server control unit 11, and the like. The storage unit 12 may function as a work memory of the server control unit 11. The server control unit 11 may include at least part of the storage unit 12.

The server I/F 13 may include a communication device capable of performing wired or wireless communication. The server I/F 13 will also be referred to as a communication unit. The communication device may be capable of performing communication using a communication method based on one of various communication standards. The server I/F 13 may be achieved using a known communication technique. Detailed description of hardware of the server I/F 13 is omitted. The function of the server I/F 13 may be achieved by one interface or may be achieved by separate interfaces for different connection destinations.

In the robot control system 1, the servers 10 may each be implemented as a server apparatus. The server apparatus may include at least one information processing apparatus. The server apparatus may cause a plurality of information processing apparatus to perform parallel processing. The server need not include a physical housing and may be achieved as a virtual machine or a container orchestration system on the basis of one of virtualization techniques. The server apparatus may be achieved using cloud services. When the server apparatus is achieved using cloud services, the server apparatus can be achieved by combining together managed services. That is, the functions of the server 10 can be achieved as cloud services.

The server apparatus may include at least one server group and at least one database group. The server group functions as the server control unit 11. The database group functions as the storage unit 12. The number of server groups may be one, or two or more. When the number of server groups is one, functions achieved by the server group encompass functions achieved by each server group. The server groups are communicably connected to one another by wire or wirelessly. The number of database groups may be one, or two or more. The number of database groups may be adjusted as necessary on the basis of the amount of data to be managed by the server apparatus and availability requirements of the server apparatus. The database groups are communicably connected to the server groups by wire or wirelessly.

Although FIGs. 1 and 2 illustrate the servers 10 as one component, a plurality of components may be managed as one system as necessary. That is, the servers 10 are configured as a platform whose capacity is variable. When a plurality of components is used as the servers 10, the system can be continuously used even in the case of natural disasters and other unforeseen events where one of the components becomes inoperable. In this case, the plurality of components is connected to one another over a wired or wireless network and mutually communicable. The plurality of components may be constructed across cloud services and an on-premises environment.

The servers 10 are connected to each of the terminal apparatuses 20, the robot control apparatuses 41, and the PLC 60 over a wired or wireless network. The servers 10, the terminal apparatuses 20, the robot control apparatuses 41, and the PLC 60 each include an interface based on a standard protocol and can perform bidirectional communication.

### <Terminal Apparatuses 20>

The terminal apparatuses 20 each include a terminal control unit 21, a terminal interface 22, and an input/output unit 23. The terminal control unit 21 will also be referred to simply as a control unit. The terminal interface 22 will also be referred to as a terminal I/F 22. The terminal apparatuses 20 are communicably connected to the network 80 through the terminal I/Fs 22.

The terminal control unit 21 may include at least one processor. The terminal control unit 21 may be configured in the same or similar manner as the server control unit 11 of the server 10. The terminal control unit 21 may execute an application for causing the input/output unit 23 to provide a GUI (graphical user interface). The terminal control unit 21 may provide the GUI by executing, on a web browser, a program of the GUI delivered from another apparatus such as the server 10. When providing the GUI on a web browser, the terminal control unit 21 may receive the program of the GUI from another apparatus such as the server 10 on the basis of a request input by the user on the web browser and draw the program on the web browser. The terminal apparatuses 20 may each further include a storage unit. The storage unit of the terminal apparatus 20 may be configured in the same or similar manner as the storage unit 12 of the server 10.

The terminal I/F 22 may be configured in the same or similar manner as the server I/F 13 of the server 10.

The input/output unit 23 provides the GUI for the user of the robot control system 1. The input/output unit 23 includes an output device for outputting information for the user and an input device for receiving inputs from the user.

The output device may include a display device. The display device may include, for example, a liquid crystal display (LCD), an organic EL (electro-luminescence) display, an inorganic EL display, a plasma display panel (PDP), or the like. The display device is not limited to these displays and may include a display of one of various other types. The display device may include light-emitting devices such as LEDs (light-emitting diodes). The display device may include various other devices. The output device may include an audio output device, such as a speaker, that outputs audio information such as sound. The output device is not limited to these examples, and may include various other devices.

The input device may include, for example, a touch panel, a touch sensor, or a pointing device such as a mouse. The input device may include physical keys. The input device may include an audio input device such as a microphone. The input device is not limited to these examples, and may include various other devices.

The terminal apparatuses 20 may each include at least one information processing apparatus. The number of terminal apparatuses 20 included in the robot control system 1 is not limited to one, and may be two or more, instead. When the robot control system 1 includes a plurality of terminal apparatuses 20, each of the plurality of terminal apparatuses 20 may receive inputs from the user. The terminal apparatuses 20 may be implemented as tablet terminals. The terminal apparatuses 20 may be implemented as mobile phones such as feature phones or smartphones. The terminal apparatuses 20 may be implemented as PC (personal computer) terminals such as desktop PCs or laptop PCs. The terminal apparatuses 20 are not limited to these examples, and may be implemented as various devices capable of providing the GUI and the communication function.

The terminal apparatuses 20 are capable of achieving, among operations, requests, or the like relating to the control of the robots 40, operations, requests, or the like more than or more advanced than those achieved through the PLC 60. Compared to the PLC 60, the terminal apparatuses 20 have specifications specialized for the robots 40. The terminal apparatuses 20 may be used, for example, by the user to store in advance programs for identifying operations to be performed by the robots 40. The terminal apparatuses 20 may be used to monitor states of the robots 40. The terminal apparatuses 20 are not limited to these examples, and may provide various other functions.

### <Robot Control Apparatuses 41>

The robot control apparatuses 41 each include a robot control unit 45. The robot control unit 45 may include at least one processor in order to achieve various functions or types of control of the robot control apparatus 41. The robot control unit 45 is capable of controlling at least one of the robots 40. The robot control unit 45 may be configured in the same or similar manner as the server control unit 11 of the server 10. The robot control apparatuses 41 may each further include a storage unit. The storage unit of the robot control apparatus 41 may be configured in the same or similar manner as the storage unit 12 of the server 10.

The robot control apparatuses 41 download, from the servers 10, the programs for identifying the operations to be performed by the robots 40. The programs for identifying the operations to be performed by the robots 40 will also be referred to as first programs. The robot control apparatuses 41 output information for controlling the robots 40 to the robots 40 on the basis of the downloaded programs to cause the robots 40 to perform the operations identified by the programs. The operations to be performed by the robots 40 may include, for example, an operation for moving a workpiece from one position to another.

The robot control apparatuses 41 may each include an interface for downloading programs from the servers 10. The interface of the robot control apparatus 41 may be configured in the same or similar manner as the server I/F 13 of the server 10. The robot control apparatuses 41 may each include a processor that generates information for controlling the operations of the robots 40 on the basis of the programs. The processor of the robot control apparatus 41 may be configured in the same or similar manner as the server control unit 11 of the server 10.

In the configuration illustrated in FIG. 1, one robot control apparatus 41 is connected to one robot 40. One robot control apparatus 41 may be connected to two or more robots 40, instead. One robot control apparatus 41 may control only one robot 40 or two or more robots 40. The number of robot control apparatuses 41 and the number of robots 40 are not limited to two, and may be one, or three or more, instead.

### <Robots 40>

The robots 40 may each be implemented as a robot arm including an arm. The arm may be, for example, a six-axis or seven-axis vertically articulated robot. The arm may be a three-axis or four axis horizontally articulated robot or a SCARA robot, instead. The arm may be a two-axis or three-axis Cartesian coordinate robot, instead. The arm may be a parallel-link robot or the like, instead. The number of axes of the arm is not limited those mentioned above.

The robots 40 may each include an end effector attached to the arm thereof. The end effector may include, for example, a gripping hand capable of gripping a workpiece. The gripping hand may include a plurality of fingers. The number of fingers of the gripping hand may be two or more. The fingers of the gripping hand may each include one or more joints. The end effector may include a suction hand capable of sucking on a workpiece. The end effector may include a scooping hand capable of scooping s workpiece. The end effector may include a tool such as a drill and be capable of performing various types of processing on a workpiece, such as drilling. The end effector is not limited to these examples and may be capable of performing various other operations, instead.

The robots 40 can each control a position of a corresponding end effector by moving a corresponding arm. The end effector may have an axis that serves as a reference for a direction of action on a workpiece. When the end effector has an axis, the robot 40 can control a direction of the axis of the end effector by moving the arm. The robot 40 controls a start and an end of a motion of the end effector that acts on a workpiece. The robot 40 can move or process a workpiece by controlling the motion of the end effector while controlling the position of the end effector or the direction of the axis of the end effector.

The robots 40 may each be implemented as an automated guided vehicle (AGV). The robots 40 may each be implemented as a drone. The robots 40 are not limited to robot arms or AGVs, and may be implemented as vehicles, electronic devices, control machines, or various other forms, instead.

The robots 40 may each further include a sensor that detects a state of each of the components thereof. The sensor may detect information regarding an actual position or an actual attitude of the corresponding component of the robot 40 or velocity or acceleration of the corresponding component of the robot 40. The sensor may detect force acting on the corresponding component of the robot 40. The sensor may detect a current flowing into a motor that drives the corresponding component of the robot 40 or torque of the motor. The sensor can detect information obtained as a result of an actual operation of the robot 40. The robot control apparatuses 41 can each grasp a result of an actual operation of the robot 40 by obtaining a result of detection performed by the sensor.

### <PLC 60>

The PLC 60 executes a program such as a ladder program. The program, such as the ladder program, executed by the PLC 60 will also be referred to as a second program. In the present embodiment, the PLC 60 downloads the ladder program from one of the servers 10 and executes the downloaded ladder program to operate sequentially. The PLC 60 operates together with the robots 40. That is, the PLC 60 is communicably connected to the robot control apparatuses 41 and cooperable with the robots 40 and will also be referred to as a cooperation control apparatus. The PLC 60 may control input of information at input ports and output of information at output ports. The PLC 60 may be communicably connected to the servers 10 through a gateway device.

The PLC 60 is capable of achieving, among operations, requests, or the like relating to the control of the robots 40, operations, requests, or the like fewer than or simpler than those achieved through the terminal apparatuses 20. Compared to the terminal apparatuses 20, the PLC 60 is capable of achieving simplified or generalized operations of equipment in the robot control system 1 including the robots 40 and/or the external apparatus 50. For example, the PLC 60 is capable of achieving operations, requests, instructions, or the like including a start or a stop of operation of the equipment including the robots 40 and the external apparatus 50.

The PLC 60 includes a PLC control unit 61. The PLC control unit 61 may include at least one processor in order to achieve various functions or types of control of the PLC 60. The PLC control unit 61 may be configured in the same or similar manner as the server control unit 11 of the server 10.

The PLC 60 includes an input device that receives inputs from the user and an output device that displays information of which the user is to be notified. The input device and the output device of the PLC 60 may be configured in the same or similar manner as those included in the input/output unit 23 of the terminal apparatus 20. The PLC 60 may further include a storage unit. The storage unit of the PLC 60 may be configured in the same or similar manner as the storage unit 12 of the server 10.

### <External Apparatus 50>

The external apparatus 50 is an apparatus different from the robots 40. The external apparatus 50 may be provided on a production line for manufacturing products. For example, the external apparatus 50 processes parts fed from the robots 40 and sends the parts back to the robots 40. The external apparatus 50 includes at least a device or a jig that operates together with the robots 40. The robots 40 feed parts to and receive parts from the external apparatus 50. The external apparatus 50 is communicably connected to the PLC 60 and operates on the basis of control information from the PLC 60. The external apparatus 50 may include, for example, a device that processes parts or a jig that aligns or forms parts. The external apparatus 50 is not limited to these examples, and may include various devices or jigs. The external apparatus 50 is not limited to processing of parts, and may perform various operations such as assembly, painting, and tightening of screws.

### (Example of Operation of Robot Control System 1)

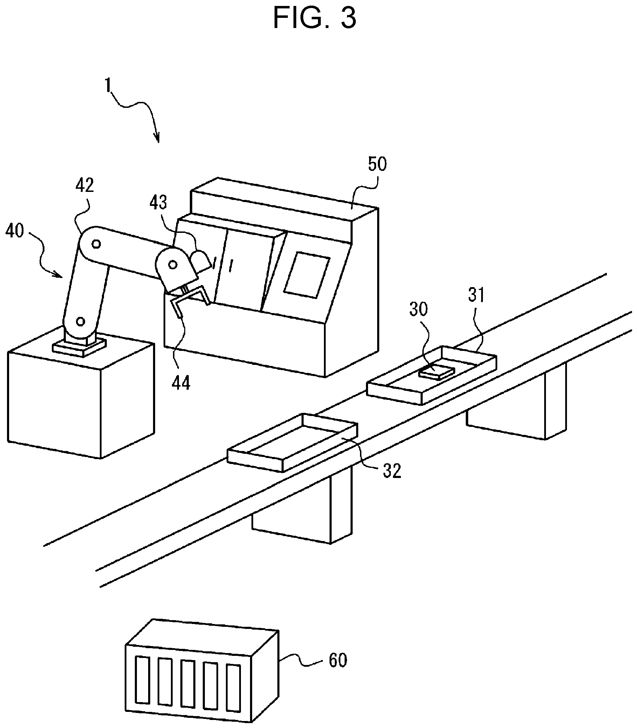

In the present embodiment, the robot control system 1 is assumed, in a configuration illustrated in FIG. 3, to cause one of the robots 40 to perform an operation on a workpiece 30 by operating the robot 40 and the external apparatus 50 together. More specifically, the robot 40 includes a robot arm 42, a camera 43, and a robot hand 44. The camera 43 and the robot hand 44 are provided at or near a tip of the robot arm 42. The robot 40 moves the camera 43 and the robot hand 44 by moving the robot arm 42. The robot 40 detects the workpiece 30 on a first tray 31 with the camera 43, grasps the workpiece 30 with the robot hand 44, and puts the workpiece 30 in the external apparatus 50. The external apparatus 50 performs a predetermined operation on the workpiece 30. In the present embodiment, the external apparatus 50 processes the workpiece 30. The robot 40 grasps, with the robot hand 44, the workpiece 30 processed by the external apparatus 50, removes the workpiece 30 from the external apparatus 50, and puts the workpiece 30 on a second tray 32.

One of the robot control apparatuses 41 downloads a program for identifying the above-described operation from one of the servers 10 and executes the program to cause the robot 40 to perform the operation. The PLC 60 downloads a ladder program generated on the basis of the program for identifying the above-described operation from one of the servers 10 and executes the ladder program to control the external apparatus 50 on the basis of a state of the robot 40 and cause the robot control apparatus 41 to control the robot 40 on the basis of the state of the external apparatus 50. That is, the PLC 60 causes the external apparatus 50 to operate together with the robot 40.

### <Creation of Program>

The operator, who is the user of the robot control system 1, for example, creates the program for identifying the above-described operation in advance. More specifically, the user creates the program for identifying the operation to be performed by the robot 40 by performing, using one of the terminal apparatuses 20, teaching with respect to the operation. When the user causes a plurality of robots 40 to perform the same operation, the user may perform the teaching with one of the plurality of robots 40. The program created by performing the teaching with the robot 40 can also be used by the other robots 40.

When the robot 40 and the external apparatus 50 operate together, a program including control relating to the robot 40 is created. When the operation to be performed by the robot 40 is putting of a part in the external apparatus 50 and removal of the part from the external apparatus 50, for example, the teaching needs to be performed in consideration of an operation of the external apparatus 50 to incorporate the operation of the external apparatus 50 into the program. The external apparatus 50 starts and stops on the basis of the control information from the PLC 60. When the robot 40 puts the workpiece 30 in the external apparatus 50 from the first tray 31, for example, the robot control apparatus 41 transmits a signal to the PLC 60. Upon receiving the signal, the PLC 60 transmits a signal for starting the external apparatus 50 to start the operation. At the same time, the robot control apparatus 41 stops the robot 40. The external apparatus 50 performs an operation, such as processing, on the workpiece 30 put therein by the robot 40. When the external apparatus 50 has finished performing the predetermined operation or a predetermined period of time has elapsed, the PLC 60 transmits a stop signal to the external apparatus 50. The external apparatus 50 stops on the basis of the stop signal. The PLC 60 transmits, to the robot control apparatus 41, a signal indicating that the external apparatus 50 has finished performing the operation. The robot control apparatus 41 causes the robot 40 to resume the operation. The robot 40 removes the workpiece 30 from the external apparatus 50 and puts the part on the second tray 32.

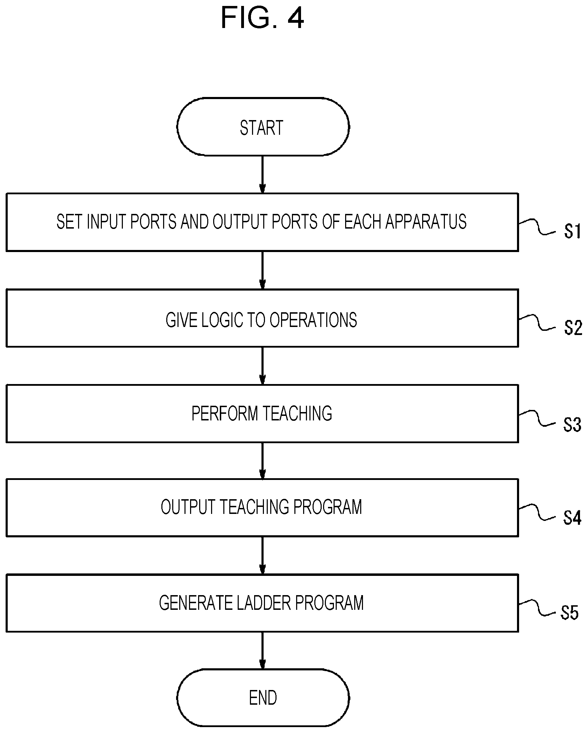

The robot control system 1 may perform the teaching in a procedure of a flowchart illustrated in FIG. 4.

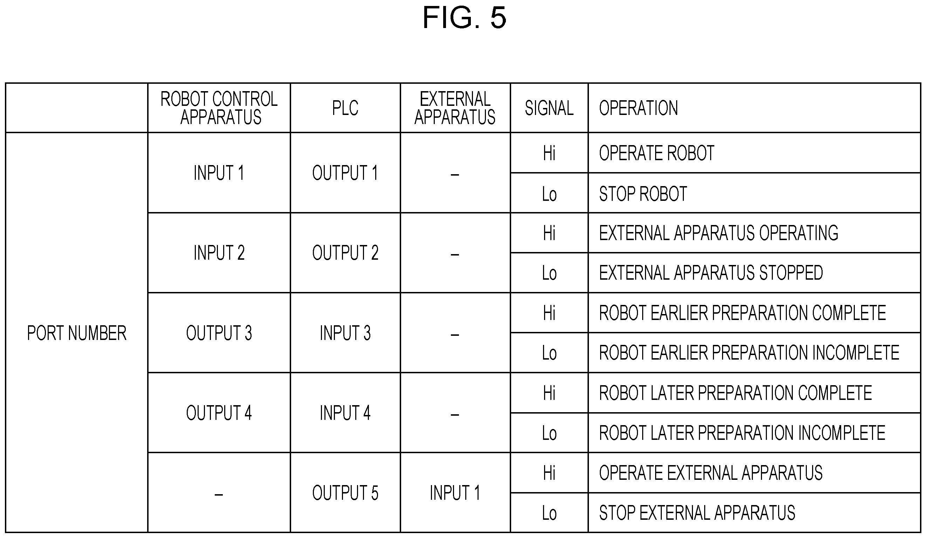

The terminal apparatus 20 sets input ports and output ports of the other apparatuses (step S 1). More specifically, the terminal apparatus 20 sets correspondences between input ports and outputs ports used for communication between the robot control apparatus 41, the PLC 60, and the external apparatus 50. As illustrated as a table in FIG. 5, for example, the terminal apparatus 20 sets input ports and output ports with which the PLC 60 communicates with the robot control apparatus 41 and the external apparatus 50. According to settings illustrated in FIG. 5, the PLC 60 communicates with first and second input ports of the robot control apparatus 41 using first and second output ports thereof, respectively, third and fourth output ports of the robot control apparatus 41 using third and fourth input ports thereof, respectively, and a first input port of the external apparatus 50 using a fifth output port thereof. The terminal apparatus 20 receives inputs regarding the settings of the input ports and the output ports of the other apparatuses from the user and sets the input ports and the output ports on the basis of the user inputs.

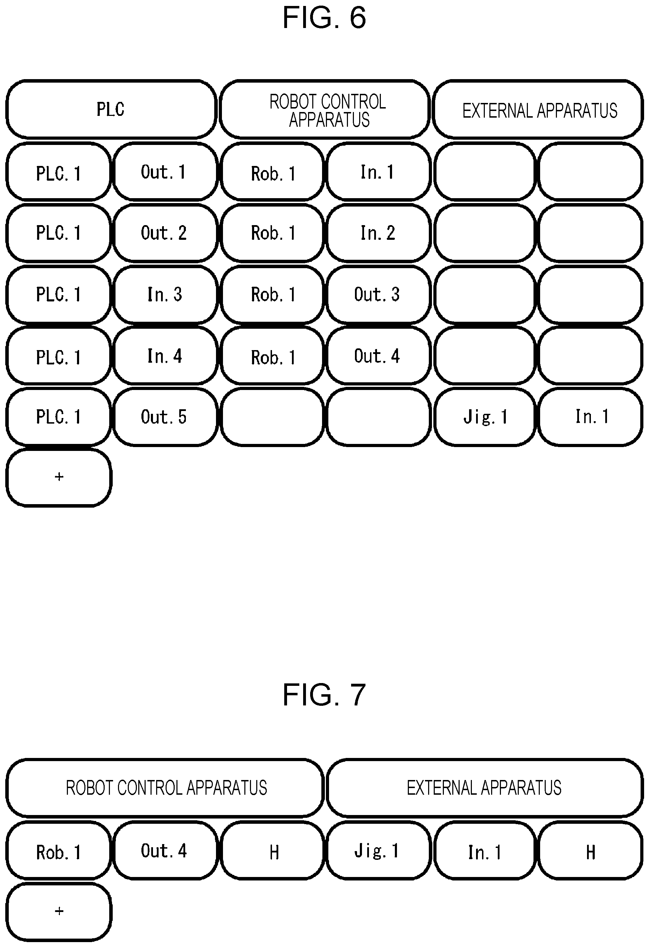

The terminal apparatus 20 may receive user inputs using a user interface illustrated in FIG. 6. "PLC. 1" in a column corresponding to the PLC 60 indicates, when the robot control system 1 includes a plurality of PLCs 60, settings of input ports and output ports of a first PLC 60. The first PLC 60 will be simply referred to as a PLC 60 hereinafter. "Rob. 1" in a column corresponding to the robot control apparatus 41 indicates, when the robot control system 1 includes a plurality of robot control apparatuses 41, settings of input ports and output ports of a first robot control apparatus 41. The first robot control apparatus 41 will be simply referred to as a robot control apparatus 41 hereinafter. "Jig. 1" in a column corresponding to the external apparatus 50 indicates, when the robot control system 1 includes a plurality of external apparatuses 50, a setting of an input port of a first external apparatus 50. The first external apparatus 50 will be simply referred to as an external apparatus 50 hereinafter. The terminal apparatus 20 can thus set input ports and output ports of a plurality of PLCs 60, robot control apparatuses 41, and external apparatuses 50.

The terminal apparatus 20 allows the user to select numbers of the PLCs 60 and numbers of the input ports and the output ports of the PLCs 60 in pull-down menus. The terminal apparatus 20 allows the user to select numbers of the robot control apparatuses 41 and input ports and output ports of the robot control apparatuses 41 in pull-down menus. A number of an apparatus and a number of an input port or an output port selected in the same row are associated with each other. In the example illustrated in FIG. 6, the first output port ("Out. 1") of the PLC 60 and the first input port ("In. 1 ") of the robot control apparatus 41 are associated with each other. That is, a signal output from the first output port of the PLC 60 is input to the first input port of the robot control apparatus 41. The second output port ("Out. 2") of the PLC 60 and the second input port ("In. 2") of the robot control apparatus 41 are associated with each other. That is, a signal output from the second output port of the PLC 60 is input to the second input port of the robot control apparatus 41. The third input port ("In. 3") of the PLC 60 and the third output port ("Out. 3") of the robot control apparatus 41 are associated with each other. That is, a signal output from the third output port of the robot control apparatus 41 is input to the third input port of the PLC 60. The fourth input port ("In. 4") of the PLC 60 and the fourth output port ("Out. 4") of the robot control apparatus 41 are associated with each other. That is, a signal output from the fourth output port of the robot control apparatus 41 is input to the fourth input port of the PLC 60. The fifth output port ("Out. 5") of the PLC 60 and the first input port ("In. 1 ") of the external apparatus 50 are associated with each other. That is, a signal output from the fifth output port of the PLC 60 is input to the first input port of the external apparatus 50.

When no input port or output port is to be associated, the terminal apparatus 20 asks the user to select a blank, not a number. In the example illustrated in FIG. 6, the first output port of the PLC 60 is associated with the first input port of the robot control apparatus 41, but not associated with any input port or output port of the external apparatus 50.

With the interface illustrated in FIG. 6, the terminal apparatus 20 can increase the number of robot control apparatuses 41, PLCs 60, or external apparatuses 50 to two or more as necessary. The terminal apparatus 20 can also increase the number of input ports and output ports of each apparatus. As a result, the terminal apparatus 20 can provide a user interface capable of defining all input ports and output ports of all apparatuses included in the robot control system 1.

The terminal apparatus 20 associates input ports and output ports in such a way as to achieve communication between the robot control apparatus 41 and the external apparatus 50 through the PLC 60. The terminal apparatus 20 may receive user inputs through a user interface illustrated in FIG. 7. In an example illustrated in FIG. 7, the fourth output port ("Out. 4") of the robot control apparatus 41 and the first input port ("In. 1 ") of the external apparatus 50 are associated with each other. When a Hi signal ("H") is output from the fourth output port ("Out. 4") of the robot control apparatus 41, the Hi signal ("H") is input to the first input port ("In. 1") of the external apparatus 50 through the PLC 60.

The terminal apparatus 20 outputs the settings of the input ports and the output ports to the server 10. The server 10 stores the settings of the input ports and the output ports in the storage unit 12.

Referring back to FIG. 4, the terminal apparatus 20 gives logic to operations (step S2). More specifically, the terminal apparatus 20 defines an operation of each apparatus at a time when a signal communicated using each of corresponding input ports and output ports is Hi and an operation of each apparatus at a time when the signal is Lo. That is, the terminal apparatus 20 associates logic (Hi or Lo) of a signal communicated using each of the corresponding input ports and output ports of each apparatus with an operation of the apparatus. The terminal apparatus 20 receives an input from the user with respect to an operation to be performed by the robot 40 at a time when the robot control apparatus 41 receives a Hi signal with a certain input port. The terminal apparatus 20 defines an operation of each apparatus at a time when a Hi or Lo signal is received with each of the corresponding input ports. The terminal apparatus 20 outputs definitions of operations to the server 10. The terminal apparatus 20 stores the definitions of the operations in the storage unit 12.

The terminal apparatus 20 performs teaching of the robot 40 (step S3). More specifically, the terminal apparatus 20 can allow the user to perform the teaching of the robot 40 by operating as follows. Description of a following example of operation is simplified. In the following example of operation, processing after occurrence of an error and the like is omitted.

The user performs the teaching using the terminal apparatus 20. First, the user specifies that the robot 40 be activated when the robot control apparatus 41 receives a Lo signal with the second input port thereof. The user then specifies that when the robot 40 gets ready for an operation, the robot control apparatus 41 output a Hi signal from the third output port thereof to notify the PLC 60 that the robot 40 is ready for an operation. The user then specifies that the robot 40 operate when the robot control apparatus 41 receives a Hi signal with the first input port thereof.

The terminal apparatus 20 receives an input for specifying an operation of the robot 40 to cause the robot control apparatus 41 to actually operate. The user specifies an operation of the robot 40 using the terminal apparatus 20 while checking an actual operation of the robot 40. The user moves the robot arm 42 of the robot 40 to a position above the first tray 31 set at predetermined coordinates. The user causes the robot 40 to recognize, using the camera 43 provided for the robot arm 42, whether there is a first tray 31. The user also causes the camera 43 to recognize whether there is a workpiece 30 on the first tray 31. If the camera 43 recognizes presence of a workpiece 30, the user causes the robot hand 44 set for the robot arm 42 to grasp the workpiece 30. The user then moves the robot arm 42 to a position immediately before the external apparatus 50, which is located at predetermined coordinates.

The user then checks whether the robot control apparatus 41 has received a Lo signal with the second input port thereof. Reception of a Lo signal with the second input port means that the external apparatus 50 is in a stop state. The user specifies that the robot 40 operate again when the robot control apparatus 41 has received a Lo signal with the second input port thereof. The user also specifies that the robot control apparatus 41 move the workpiece 30 to predetermined coordinates inside the external apparatus 50, dispose the workpiece 30 at the coordinates by opening the robot hand 44, and return the robot arm 42 to the position immediately before the external apparatus 50. The user then specifies that the robot control apparatus 41 output a Hi signal with the fourth output port thereof. When the robot control apparatus 41 outputs the Hi signal with the fourth output port thereof, the PLC 60 output a Hi signal to the first input port of the external apparatus 50. Upon receiving the Hi signal with the first input port, the external apparatus 50 starts an operation on the workpiece 30.

The user checks whether the robot control apparatus 41 has received a Hi signal with the second input port thereof. Reception of a Hi signal with the second input port means that the external apparatus 50 has finished an operation and entered the stop state. After the robot control apparatus 41 receives a Hi signal with the second input port thereof, the user causes the robot control apparatus 41 to operate the robot 40. The robot control apparatus 41 moves the robot arm 42 to the workpiece 30 processed inside the external apparatus 50, causes the robot hand 44 to grasp the workpiece 30, moves the robot hand 44 to the second tray 32, and disposes the workpiece 30 on the robot 2 by opening the robot hand 44 above the second tray 32.

The terminal apparatus 20 can create a teaching program for causing the robot 40 to perform the above-described series of operations on the basis of user inputs.

Referring back to FIG. 4, the terminal apparatus 20 outputs the program for identifying the operation of the robot 40 to the server 10 (step S4.) The program includes the teaching program.

The server 10 stores the obtained program in the storage unit 12 and generates a ladder program of the PLC 60 on the basis of the obtained program (step S5). The server 10 generates the ladder program on the basis of content of the obtained teaching program. The server 10 generates the ladder program on the basis of the obtained teaching program, setting data regarding the input ports and the output ports, and definition data regarding the operations. The server 10 generates the ladder program in a format in which the ladder program can be installed on the PLC 60. Since the server 10 generates the ladder program, the user need not input information in order to create the ladder program. The PLC 60 can install the ladder program by downloading the ladder program from the server 10 or importing the ladder program using a portable memory or the like with the terminal apparatus 20.

The server 10 may generate the ladder program from the teaching program using ladder program generation tool software prepared in advance. An international standard IEC 61131-3 defines ladder programs. Any PLC 60 can basically execute ladder programs described on the basis of the international standard. In the present embodiment, the ladder program is assumed to be described in a standard format of the IEC 61131-3. The server 10 activates the ladder program generation tool software using the terminal apparatus 20, asks the user to select, from a list of saved teaching programs, a teaching program from which the ladder program is to be generated, and generates the ladder program.

More specifically, the server 10 describes, on the basis of the definitions of numbers of the input ports and the output ports of each apparatus, an operation at a time when the PLC 60 is activated in the ladder program as a first command. The server 10 then describes a command for initializing the external apparatus 50 in the ladder program.

The server 10 then extracts a command for controlling input ports and output ports included in the teaching program. The server 10 describes, in the ladder program, a command where a relationship between transmission and reception of a signal with each input port or output port is reversed. It is assumed that, in the above-described example of teaching, the teaching program includes a command "the robot 40 be activated when the robot control apparatus 41 receives a Lo signal with the second input port thereof. In this case, the server 10 describes a command "output a Lo signal from the second output port of the PLC 60" in the ladder program. The server 10 also describes, in the ladder program on the basis of definitions that associate signals output from the robot control apparatus 41 to input ports and output ports and operations of the external apparatus 50, a command by which the PLC 60 controls the operation of the external apparatus 50. The server 10 may describe, in the ladder program, a command for maintaining a state of a signal for a certain period of time using a timer included in the PLC 60. The ladder program can be generated by compiling a ladder diagram. The ladder diagram complied as the ladder program will be described later. The server 10 stores the ladder program in the storage unit 12. The server 10 exports the ladder program and imports the ladder program to the PLC 60. The server 10 may export the ladder program to the terminal apparatus 20 and cause the terminal apparatus 20 to import the ladder program to the PLC 60.

After the procedure in step S5 in FIG. 4 ends, the robot control system 1 ends the execution of the procedure of the flowchart of FIG. 4. As described above, the robot control system 1 can generate in advance a teaching program for identifying the operation of the robot 40 and a ladder program corresponding to the teaching program by performing the procedure of the flowchart illustrated in FIG. 4.

Although an example where the terminal apparatus 20 creates a program for identifying the operation of the robot 40 has been described above, another component such as the server 10 may create the program, instead. Although an example where the server 10 creates a ladder program has been described above, another component such as the terminal apparatus 20 may create the ladder program, instead.

### <Normal Operation of Robot 40>

As described above, the robot control system 1 stores programs in the server 10 in advance. The robot control system 1 allows, as a normal operation, the user to select one of the programs and causes the robot 40 to perform an operation identified by the selected program. Flow of data in the normal operation will be described hereinafter.

First, the user turns on the robot 40. The user may turn on each of the plurality of robots 40. When power supplies for the plurality of robots 40 are centrally managed using an electric switchboard or the like, the user may turn on the plurality of robots 40 simultaneously.

When energized, the robot 40 enters a standby state, where the robot 40 waits for downloading of a teaching program. In the standby state, the robot control apparatus 41 that controls the robot 40 does not have the teaching program. Even if some kind of trouble occurs in the robot 40, therefore, the teaching program is not executed unexpectedly. That is, the robot 40 does not operate unexpectedly. The robot control apparatus 41 may remove a downloaded program after the robot 40 finishes a planned operation.

The PLC 60 receives, from the user, an input for selecting a robot 40 to perform an operation. The PLC 60 also receives, from the user, an input for selecting the operation to be performed by the robot 40. More specifically, the PLC 60 provides a user interface for enabling the user to enter his/her selections. The user enters his/her selections from an operation panel of the PLC 60.

The PLC 60 may display a robot number on the operation panel as information for identifying the robot 40 or a nickname such as "robot #1" or "Taro" as a robot name.

The PLC 60 may display, on the operation panel, an operation number as information for identifying the operation to be performed by the robot 40 or an operation name such as "processing". The information for identifying the robot 40 and the operation displayed on the operation panel is stored in the PLC 60 as a robot number and a program number, respectively, through internal processing of the PLC 60.

The PLC 60 may display an execution switch on the operation panel. The PLC 60 may include an execution button provided as hardware. The user causes the selected robot 40 to perform the selected operation by pressing the execution switch displayed on the operation panel or the execution button provided as hardware.

The PLC 60 transmits, to the server 10, the information regarding the robot 40 and the operation specified through the selection by the user and information with which the user instructs the robot 40 to perform the operation. More specifically, the PLC 60 transmits, to the server 10, an instruction to the robot 40 to perform the operation and data including the robot number and the program number as arguments of the instruction. The PLC 60 may transmit the information to the server 10 through a gateway device or transmit the information to the server 10 over the network 80 without a gateway device. The robot control apparatus 41 may be used as a gateway device.

Upon receiving the data from the PLC 60, the server 10 calls, among teaching programs stored in the server 10, a teaching program corresponding to the received program number. The server 10 downloads the called teaching program onto a robot control apparatus 41 of a robot 40 corresponding to the received robot number. The robot control apparatus 41 generates control information for controlling the operation of the robot 40 on the basis of the downloaded teaching program and causes the robot 40 to perform the operation.

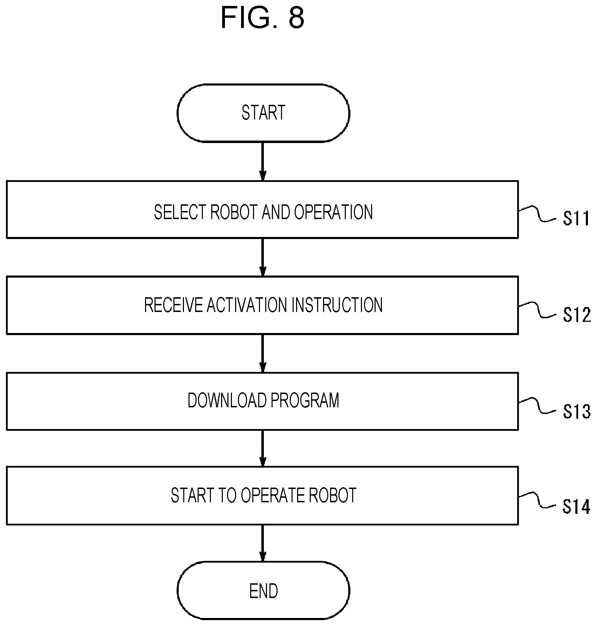

The robot control system 1 can allow, as a normal operation, the user to select a program and cause the robot 40 to operate after creating teaching programs and ladder programs in advance. The robot control system 1 may perform the normal operation in a procedure of a flowchart illustrated in FIG. 8.

The PLC 60 selects a robot 40 and an operation to be performed by the robot 40 (step S11). More specifically, the PLC 60 receives inputs from the user with respect to a robot 40 to perform an operation and the operation to be performed by the robot 40. That is, the user selects, using the PLC 60, a robot 40 to perform an operation and an operation to be performed by the robot 40.

The PLC 60 receives, from the user, an input for requesting activation (step S12). More specifically, when the user presses an activation switch, the PLC 60 outputs information indicating an operation of the robot 40 to the server 10.

The server 10 downloads a program onto the robot control apparatus 41 and the PLC 60 (step S13). More specifically, the server 10 downloads a teaching program that identifies the operation selected by the user using the PLC 60 onto the robot control apparatus 41. The teaching program to be downloaded is described in a JSON format. Data size of the teaching program is several kilobytes. Time taken for the downloading, therefore, is short. The server 10 downloads, onto the PLC 60, a ladder program corresponding to the teaching program downloaded onto the robot control apparatus 41.

The robot control apparatus 41 starts to operate the robot 40 on the basis of the downloaded teaching program (step S14). The PLC 60 operates on the basis of the downloaded ladder program. The PLC 60 may control the external apparatus 50 on the basis of the ladder program.

After finishing the procedure in step S14, the robot control system 1 ends the execution of the procedure of the flowchart of FIG. 8. As described above, the robot control system 1 can allow, as a normal operation, the user to select a program and operate the robot 40 by performing the procedure of the flowchart illustrated in FIG. 8.

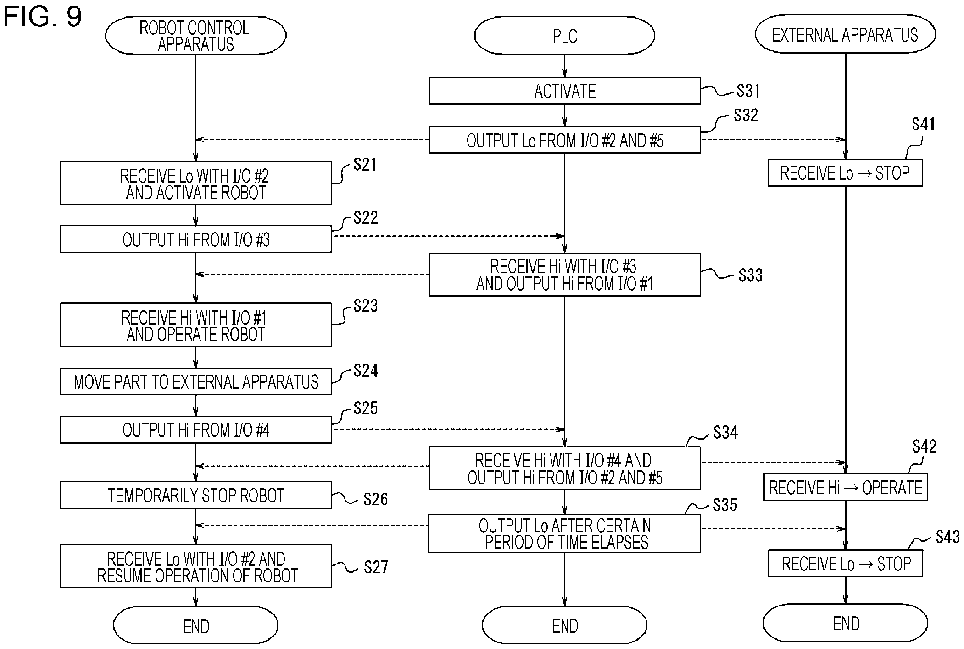

When the robot control system 1 causes the robot 40 to perform an operation on the basis of selection performed by the user, the robot control system 1 may specifically perform a procedure of a flowchart illustrated in FIG. 9.

It is assumed that, in the procedure illustrated in FIG. 9, the operation of each apparatus when a signal communicated with each input port or output port is Hi and the operation of each apparatus when the signal is Lo are associated as defined in the table illustrated in FIG. 5.

When the PLC 60 transmits a Hi signal from the first output port thereof to the first input port of the robot control apparatus 41, for example, the robot control apparatus 41 starts to operate the robot 40. That is, the robot control apparatus 41 operates the robot 40. Conversely, when the PLC 60 transmits a Lo signal from the first output port thereof to the first input port of the robot control apparatus 41, the robot control apparatus 41 stops operating the robot 40.

When the PLC 60 transmits a Hi signal from the second output port thereof to the second input port of the robot control apparatus 41, the robot control apparatus 41 recognizes that the external apparatus 50 is operating. Conversely, when the PLC 60 transmits a Lo signal from the second output port thereof to the second input port of the robot control apparatus 41, the robot control apparatus 41 recognizes that the external apparatus 50 is stopped.

When the robot control apparatus 41 transmits a Hi signal from the third output port thereof to the third input port of the PLC 60, the PLC 60 recognizes that the robot control apparatus 41 has finished earlier preparation (earlier preparation complete). Conversely, when the robot control apparatus 41 transmits a Lo signal from the third output port thereof to the third input port of the PLC 60, the PLC 60 recognizes that the robot control apparatus 41 has not finished the earlier preparation (earlier preparation incomplete). The earlier preparation includes, for example, a preparation operation for establishing a state where the robot 40 can be activated and operated.

When the robot control apparatus 41 transmits a Hi signal from the fourth output port thereof to the fourth input port of the PLC 60, the PLC 60 recognizes that the robot control apparatus 41 has finished later preparation (later preparation complete). Conversely, when the robot control apparatus 41 transmits a Lo signal from the fourth output port thereof to the fourth input port of the PLC 60, the PLC 60 recognizes that the robot control apparatus 41 has not finished the later preparation (later preparation incomplete). The later preparation includes, for example, an operation performed by the robot 40 to move the workpiece 30 to the external apparatus 50.

When the PLC 60 transmits a Hi signal from the fifth output port thereof to the first input port of the external apparatus 50, the external apparatus 50 starts an operation. That is, the external apparatus 50 operates. Conversely, when the PLC 60 transmits a Lo signal from the fifth output port thereof to the first input port of the external apparatus 50, the external apparatus 50 stops the operation.

A procedure of a flowchart illustrated in FIG. 9 will be described hereinafter.

The PLC 60 is activated when the user presses the activation switch (step S31). The PLC 60 outputs a Lo signal from the second output port (I/O #2) and the fifth output port thereof (I/O #5) (step S32). When the external apparatus 50 receives the Lo signal with the first input port thereof from the fifth output port of the PLC 60, the external apparatus 50 stops operation thereof (step S41). The external apparatus 50 prepares such that the robot 40 can put the workpiece 30 in the external apparatus 50. The external apparatus 50 remains stopped until receiving a Hi signal.

Upon receiving the Lo signal with the second input port thereof (I/O #2), the robot control apparatus 41 activates the robot 40 (step S21). The robot control apparatus 41 outputs a Hi signal from the third output port thereof (I/O #3) (step S22). Upon receiving the Hi signal with the third input port thereof (I/O #3), the PLC 60 outputs a Hi signal from the first output port thereof (I/O #1) (step S33). Upon receiving the Hi signal with the first input port thereof (I/O #1), the robot control apparatus 41 operates the robot 40 (step S23). The robot 40 moves the workpiece 30 from the first tray 31 to the external apparatus 50 (step S24).

After the robot 40 moves the workpiece 30 to the external apparatus 50, the robot control apparatus 41 outputs a Hi signal from the fourth output port thereof (I/O #4) (step S25). The robot control apparatus 41 temporarily stops the robot 40 (step S26). Upon receiving the Hi signal with the fourth input port thereof (I/O #4), the PLC 60 outputs a Hi signal from the second output port (I/O #2) and the fifth output port thereof (I/O #5) (step S34). Upon receiving the Hi signal with the first input port thereof from the fifth output port of the PLC 60, the external apparatus 50 starts to operate (step S42). More specifically, the external apparatus 50 processes, for example, the workpiece 30 put therein by the robot 40.

The PLC 60 counts time with a timer and, after a certain period of time elapses, outputs a Lo signal from the second output port (I/O #2) and the fifth output port thereof (I/O #5) (step S35). The certain period of time is long enough for the external apparatus 50 to complete the operation for the workpiece 30. After performing the procedure in step S35, the PLC 60 ends the execution of the procedure of the flowchart of FIG. 9.

Upon receiving the Lo signal with the first input port thereof from the fifth output port of the PLC 60, the external apparatus 50 stops the operation thereof (step S43). The external apparatus 50 prepares such that the robot 40 can remove the workpiece 30 from the external apparatus 50. After performing the procedure in step S43, the external apparatus 50 ends the execution of the procedure of the flowchart of FIG. 9.

Upon receiving the Lo signal with the second input port thereof (I/O #2), the robot control apparatus 41 resumes the operation of the robot 40 (step S27). More specifically, the robot control apparatus 41 controls the robot 40 such that the robot 40 removes the workpiece 30 from the external apparatus 50 and puts the workpiece 30 on the second tray 32. After performing the procedure in step S27, the robot control apparatus 41 ends the execution of the procedure of the flowchart of FIG. 9.

### <Summary>

As described above, according to the present embodiment, the robot control system 1 receives an operation instruction from the user with the PLC 60, downloads a program for identifying a selected operation onto the controller, and causes the robot 40 to perform the operation. As a result, the convenience of the management of programs can be improved. The risks of the robot 40 operating at unintended times can also be reduced. Since the user does not operate the terminal apparatus 20 and operates only the PLC 60, operability can be improved and the risks of unauthorized operation can be reduced.

### (Other Specific Examples)

Other specific examples will be described hereinafter.

### <Specific Example of Ladder Diagram>

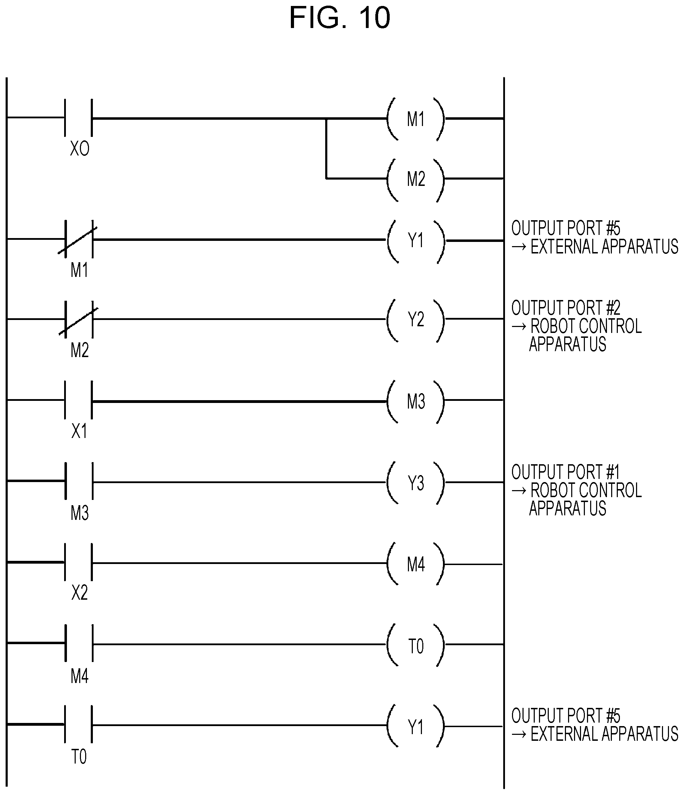

FIG. 10 illustrates an example of a ladder program represented as a ladder diagram. In first to third rows of the ladder diagram illustrated in FIG. 10, a switch X0 is pressed and turns on. When X0 turns on, the PLC 60 outputs a Lo signal to Y1. The outputting of the signal to Y1 corresponds to outputting of a Lo signal from the fifth output port of the PLC 60 to the external apparatus 50. That is, the outputting of the signal to Y1 corresponds to an instruction to stop the external apparatus 50.

When X0 turns on, the PLC 60 outputs a Lo signal to Y2. The outputting of the signal to Y2 corresponds to outputting of a Lo signal from the second output port of the PLC 60 to the second input port of the robot control apparatus 41. That is, the outputting of the signal to Y2 corresponds to the robot control apparatus 41 being notified of the stop state of the external apparatus.

In fourth and fifth rows of the ladder diagram, X1 turns on when the third input port of the PLC 60 receives a Hi signal from the third output port of the robot control apparatus 41. When X1 turns on, the PLC 60 outputs a Hi signal to Y3. The outputting of the signal to Y3 corresponds to outputting of a Hi signal from the first output port of the PLC 60 to the first input port of the robot control apparatus 41. That is, the outputting of the signal to Y3 corresponds to activation of the robot 40.

In sixth to eighth rows of the ladder diagram, X2 turns on when the fourth input port of the PLC 60 receives a Hi signal from the fourth output port of the robot control apparatus 41. The PLC 60 starts to count time with a timer T0 when X2 turns on. T0 remains on for a certain period of time counted by the timer. While T0 is on, the PLC 60 outputs a signal to Y1. The outputting of the signal to Y1 corresponds to outputting of a Hi signal from the fifth output port of the PLC 60 to the external apparatus 50. That is, the outputting of the signal to Y1 corresponds to an instruction to operate the external apparatus 50. The PLC 60 operates the external apparatus 50 for the certain period of time on the basis of the signal from the robot control apparatus 41 as described in the sixth to eighth rows of the ladder diagram.

### <Specific Example of Flow of Data in Normal Operation>

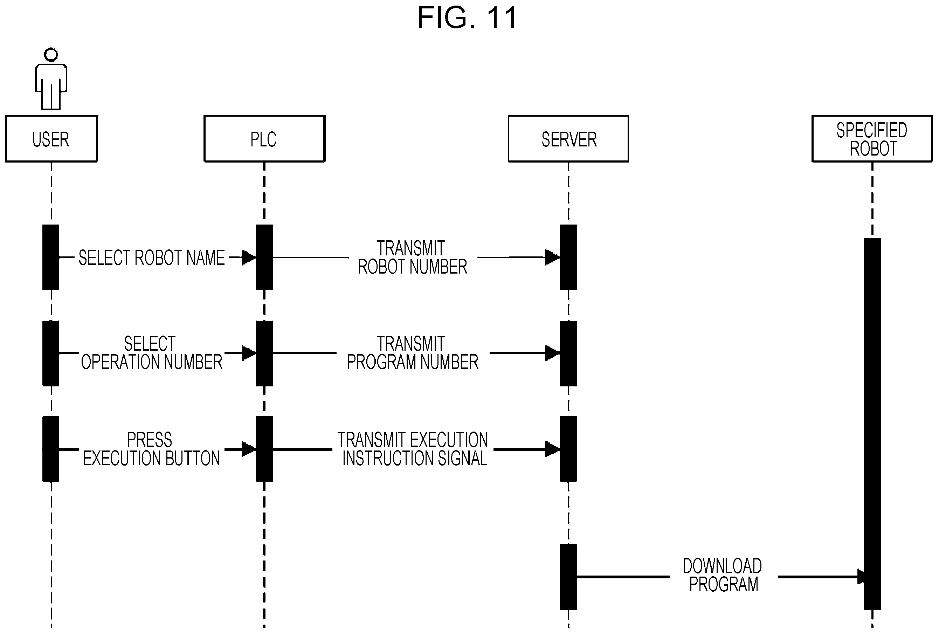

A specific example of flow of data in the normal operation will be described hereinafter with reference to FIG. 11.

The PLC 60 receives, from the user, an input for selecting a robot 40 to perform an operation. The PLC 60 also receives, from the user, an input for selecting an operation to be performed by the robot 40. An arrow "select robot name" indicates flow of data at a time when the user selects a robot 40 using the PLC 60. An arrow "select operation number" indicates flow of data at a time when the user selects an operation using the PLC 60.

The PLC 60 allows the user to press the execution switch or the execution button to receive inputting of an instruction to the robot 40 to perform the operation. An arrow "press execution button" in FIG. 11 indicates flow of data at a time when the user presses the execution switch or the execution button using the PLC 60.

The PLC 60 transmits, to the server 10, information regarding the robot 40 and the operation specified as a result of the selection performed by the user and information for instructing the robot 40 to perform the operation. Arrows "transmit robot number", "transmit program number", and "transmit execution instruction signal" in FIG. 11 indicate flow of data from the PLC 60 to the server 10.

The server 10 downloads a teaching program onto the robot control apparatus 41 on the basis of the information received from the PLC 60. An arrow "download program" in FIG. 11 indicates flow of data from the server 10 to the robot 40.

### (Other Embodiments)

In the present embodiment, the robot control system 1 includes the PLC 60 as the cooperation control apparatus that operates together with the robot 40. The robot control system 1 may include one of various other controllers such as a relay apparatus or a production equipment control computer as the cooperation control apparatus, instead of the PLC 60. The cooperation control apparatus includes a cooperation control unit. The cooperation control unit may include at least one processor in order to achieve various functions or types of control of the cooperation control apparatus. The cooperation control unit may be configured in the same or similar manner as the server control unit 11 of the server 10. The robot control system 1 may include, as the cooperation control apparatus, a component operating on a cloud platform, such as an equipment management control system. Even when the cooperation control apparatus operates on a cloud platform, at least a user interface may operate in an on-premises environment.

The robot control system 1 creates a first program for identifying an operation to be performed by the robot 40 through teaching. The first program is not limited to a teaching program, and may include various other programs.

The robot control system 1 generates a ladder program as a second program to be executed by the cooperation control apparatus. The second program is not limited to a ladder program, and may include various other programs.

The server control unit 11 may install the first program on the robot control apparatus 41 at a certain time. The server control unit 11 may install the second program on the cooperation control apparatus at the certain time so that the robot control apparatus 41, on which the first program is installed, and the cooperation control apparatus operate together. The certain time may precede, for example, a time when the robot 40 performs the normal operation for a first time. The certain time may be set on the basis of a management plan for the robot 40. By installing the programs at the certain time, the management of the robot 40 starts efficiently, easily, and quickly. The server control unit 11, the robot control apparatus 41, or the cooperation control apparatus may delete the installed first program or second program after a planned operation of the robot 40 or a planned external operation is completed.

When the user selects a certain operation in the robot control system 1 through the cooperation control apparatus, a ladder program for the cooperation control apparatus corresponding to a result of the selection performed by the user may be downloaded. In this case, the storage unit 12 stores at least one first program that can be executed by at least one robot control unit 45 and at least one second program that can be executed by at least one cooperation control unit. The server control unit 11 extracts, on the basis of user inputs, a certain second program corresponding to certain at least one first program from the storage unit 12 and outputs the certain second program to a certain cooperation control unit that is to operate together with certain at least one robot control unit 45 that is to execute the certain at least one first program.

In the robot control system 1, the user may select an external apparatus 50 communicably connected to a certain cooperation control apparatus. That is, the cooperation control apparatus may receive, from the user, an input for selecting an external apparatus 50 to perform an operation, and a teaching program based on a result of the selection performed by the user may be downloaded. More specifically, the storage unit 12 stores at least one first program that can be executed by at least one robot control unit 45 and at least one second program that can be executed by at least one cooperation control unit. The server control unit 11 may extract, on the basis of user inputs, a certain second program including control performed by the external apparatus 50 selected by the user and certain at least one first program corresponding to the certain second program from the storage unit 12 and output the certain at least one first program to certain at least one robot control unit 45 that is to operate together with a certain cooperation control unit that is to execute the certain second program. When the certain at least one first program corresponding to the certain second program includes a plurality of first programs, certain at least one of the first programs may be extracted on the basis of a user input.

In the above-described embodiment, the cooperation control apparatus, the robot control apparatus 41, and the external apparatus 50 each include input ports for receiving signals and output ports for outputting signals. Each apparatus may include input/output ports that can function as both an input port and an output port. More specifically, each apparatus may perform serial communication with the input/output ports on the basis of a LAN (local area network) or a communication standard such as RS-232C or RS-485.

When each apparatus includes input/output ports, the terminal apparatus 20 also sets, in the procedure for setting input ports and output ports in step S1 in FIG. 4, whether to function each input/output port as an input port or an output port. More specifically, when each apparatus communicates over a LAN, the terminal apparatus 20 may specify a number of an input/output port with an address as a setting of the input/output port. The terminal apparatus 20 may specify whether to function an input/output port with a specified number as an input port or an output port with a bit represented as Hi or Lo data.

### <Integration of Terminal Apparatus 20 and Server 10>

Although an example where the terminal apparatus 20 is included along with the server 10 has been described in the above-described embodiment, the server 10 may function as part or the entirety of the terminal apparatus 20. That is, for example, the server 10 may include part or the entirety of the terminal control unit 21, or the server control unit 11 may function as part or the entirety of the terminal control unit 21. In this case, part or the entirety of the terminal apparatus 20 is integrated with the server 10, and the server 10 may perform the various functions and types of control of the terminal apparatus 20 described above. More specifically, the terminal apparatus 20 in the above description may be replaced by the server 10, and the server control unit 11 or the terminal control unit 21 of the server 10 may perform the various functions and types of control of the terminal apparatus 20 described above. In this case, the various components of the server 10 may function as the various components of the terminal apparatus 20, or the server 10 may include the various components of the terminal apparatus 20.

### <Integration of Robot Control Apparatus 41 and Server 10>

Although an example where the robot control apparatus 41 is included along with the server 10 has been described in the above-described embodiment, the server 10 may function as part or the entirety of the robot control apparatus 41. That is, for example, the server 10 may include part or the entirety of the robot control unit 45 that controls the robot 40, or the server control unit 11 may function as part or the entirety of the robot control unit 45. In this case, the robot control apparatus 41 is integrated with the server 10, and the server 10 may perform the various functions and types of control of the robot control apparatus 41 described above. More specifically, the robot control apparatus 41 in the above description can be replaced by the server 10, and the server control unit 11 or the robot control unit 45 of the server 10 may perform the various functions and types of control of the robot control apparatus 41 described above. In this case, the various components of the server 10 may function as the various components of the robot control apparatus 41, or the server 10 may include the various components of the robot control apparatus 41. In this case, the robot control apparatus 41 may be integrated with the server 10 along with part or the entirety of the terminal apparatus 20.

### <Integration of PLC 60 and Server 10>

Although an example where the PLC 60 is included along with the server 10 has been described in the above-described embodiment, the server 10 may function as part or the entirety of the PLC 60. That is, for example, the server 10 may include part or the entirety of the PLC control unit 61, or the server control unit 11 may function as part or the entirety of the PLC control unit 61. In this case, the PLC 60 is integrated with the server 10, and the server 10 may perform the various functions and types of control of the PLC 60 described above. More specifically, the PLC 60 in the above description can be replaced by the server 10, and the server control unit 11 or the PLC control unit 61 of the server 10 may perform the various functions and types of control of the PLC 60 described above. In this case, the various components of the server 10 may function as the various components of the PLC 60, or the server 10 may include the various components of the PLC 60. In this case, the PLC 60 may be integrated with the server 10 along with the terminal apparatus 20 and/or the robot control apparatus 41.

Part or the entirety of each of the components of the robot control system 1 may be integrated as described above.

Although embodiments of the robot control system 1 have been described, embodiments of the present disclosure may be implemented as a method or a program for achieving the system or the apparatus or a storage medium (e.g., an optical disc, a magnetooptical disk, a CD-ROM, a CD-R, a CD-RW, a magnetic tape, a hard disk, or a memory card) storing the program. The program may be stored in a non-transitory computer-readable medium.

Embodiments of the program are not limited to an application program such as an object code compiled by a compiler or a program code executed by an interpreter, and may be a program module or the like incorporated into an operating system, instead. The program may or may not be configured such that a CPU on a control board solely performs all processing. The program may be configured such that another processing unit mounted on an expansion board or an expansion unit attached to the board as necessary executes part or the entirety of the program.

Although embodiments of the present disclosure have been described on the basis of the drawings and the examples, note that those skilled in the arm can change or alter the embodiments in various ways on the basis of the present disclosure. Note, therefore, that the scope of the present disclosure also includes such changes or alterations. For example, the functions of each component can be rearranged insofar as no logical contradiction is caused, and a plurality of components may be combined together or divided.

All the components described herein and/or all the disclosed methods or all the steps in the processes may be combined together in any combination unless the combination includes mutually exclusive features. The features described herein may each be replaced by an alternative feature that serves for the same, equivalent, or similar purpose, unless otherwise explicitly denied. Each of the disclosure features is just an example of a comprehensive set of the same or equivalent features, unless otherwise explicitly denied.

Embodiments of the present disclosure are not limited to any specific configurations according to the above-described embodiments. Embodiments of the present disclosure may be extended to all the novel features described herein or any combination thereof or all the novel methods or processing steps described herein or any combination thereof.

Terms such as "first" and "second" herein are identifiers for distinguishing the corresponding components. The components distinguished with the terms such as "first" and "second" herein may exchange the numbers thereof. For example, the first program may exchange "first" for "second", which are identifiers, with the second program. The identifiers are simultaneously exchanged. Even after the exchange of the identifiers, the components are still distinguished from each other. Identifiers may be removed. Components from which identifiers have been removed are distinguished from each other by reference numerals. The identifiers such as "first" and "second" herein are not intended to be used as a sole basis for interpretation of order of the components or presence of an identifier with a smaller number.

In the present embodiment, the server 10 (program management apparatus) can be seen as performing a method for managing a program including the procedures illustrated in FIGs. 4 and 8. The method for managing a program may be implemented as a program for managing a program to be executed by the processor included in the server 10. The program for managing a program may be stored in a non-transitory computer-readable medium.

### REFERENCE SIGNS

- 1: robot control system
- 10: server (11: server control unit, 12: storage unit, 13: server I/F)
- 20: terminal apparatus (21: terminal control unit, 22: terminal I/F, 23: input/output unit)
- 30: workpiece
- 31, 32: first tray, second tray
- 40: robot (42: robot arm, 43: camera, 44: robot hand)
- 41: robot control apparatus (45: robot control unit)
- 50: external apparatus
- 60: PLC (61: PLC control unit)
- 80: network (82: access point)

## Claims

1. A program management apparatus comprising:
a communicator communicable with at least one robot controller;
a storage storing a plurality of first programs for controlling an operation of a robot, the plurality of first programs being executed by the at least one robot controller; and
a controller that outputs at least one of the plurality of first programs selected on a basis of a request from a cooperation controller capable of operating together with the at least one robot controller to certain at least one of the at least one robot controller that is to operate together with the cooperation controller.

2. The program management apparatus according to claim 1,
wherein the controller generates, on a basis of the at least one first program, a second program to be executed by the cooperation controller so that the cooperation controller operates together with the certain at least one robot controller.

3. The program management apparatus according to claim 2,
wherein the controller generates the second program such that the second program includes a command for controlling at least a device or a jig that operates together with the robot.

4. The program management apparatus according to claim 2 or 3,
wherein the controller obtains, from a terminal apparatus, a correspondence between an input/output port of the certain cooperation controller and an input/output port of the certain at least one robot controller and generates the second program on a basis of the correspondence.

5. The program management apparatus according to any of claims 2 to 4,
wherein the controller installs the second program on the cooperation controller at a certain time so that the certain at least one robot controller on which the at least one first program is installed and the cooperation controller operate together.

6. A program management apparatus comprising:
an interface that receives a user input;
a communicator communicable with at least one robot controller capable of controlling at least one robot and at least one cooperation controller capable of operating together with the at least one robot controller;
a storage storing at least one first program executable by the at least one robot controller and at least one second program executable by the at least one cooperation controller; and
a controller connected to the interface, the communicator, and the storage,
wherein the controller outputs a certain one of the at least one second program corresponding to certain at least one of the at least one first program selected on a basis of the user input to a certain one of the at least one cooperation controller that is to operate together with certain at least one of the at least one robot controller that is to execute the certain at least one first program.

7. A program management apparatus comprising:
an interface that receives a user input;
a communicator communicable with at least one robot controller capable of controlling at least one robot and at least one cooperation controller capable of operating together with the at least one robot controller;
a storage storing at least one first program executable by the at least one robot controller and at least one second program executable by the at least one cooperation controller; and
a controller connected to the interface, the communicator, and the storage,
wherein the controller outputs certain at least one of the at least one first program corresponding to a certain one of the at least one second program selected on a basis of the user input to certain at least one of the at least one robot controller that is to operate together with a certain one of the at least one cooperation controller that is to execute the certain second program.

8. The program management apparatus according to claim 6 or 7,
wherein the controller generates, on a basis of the certain at least one first program, a second program to be executed by the certain cooperation controller so that the certain cooperation controller operates together with the certain at least one robot controller.

9. The program management apparatus according to claim 8,
wherein the controller generates the second program such that the second program includes a command for controlling at least a device or a jig that operates together with the at least one robot.

10. The program management apparatus according to claim 8 or 9,
wherein the controller obtains, from a terminal apparatus, a correspondence between an input/output port of the certain cooperation controller and an input/output port of the certain at least one robot controller and generates the second program on a basis of the correspondence.

11. The program management apparatus according to any of claims 8 to 10,
wherein the controller installs the second program on the certain cooperation controller at a certain time so that the certain at least one robot controller on which the at least one first program is installed and the certain cooperation controller operate together.

12. A robot control system comprising:
the program management apparatus according to any of claims 1 to 11;
the robot controller; and
the cooperation controller.

13. A method for managing a program, the method comprising:
storing a plurality of first programs to be executed by at least one robot controller that controls an operation of a robot; and
outputting at least one of the plurality of first programs selected by a cooperation controller capable of cooperating with the at least one robot controller to one of the at least one robot controller selected by the cooperation controller.
